# EUROPEAN PATENT APPLICATION

(11) **EP 4 817 795 A1**
(43) Date of publication of application: **07.10.2026**
(21) Application number: 25173871.2
(22) Date of filing: 01.05.2025
(51) Int. Cl.: B25B 13/46, B25B 23/142, B25G 1/04

(54) **DIGITAL DISPLAY TORQUE WRENCH**

(30) Priority: 31.03.2025 CN 202510392108
(71) Applicant: Zhejiang Yuan Gong Machinery Co., LTD, Shaoxing City Zhejiang 312000 (CN)
(72) Inventor: XU, Minggang, Shaoxing City, 312000 (CN); XIA, Mingchun, Shaoxing City, 312000 (CN); DONG, Wenfan, Shaoxing City, 312000 (CN)
(74) Representative: Valet Patent Services Limited

(57) **Abstract**

The present invention discloses a digital display torque wrench, comprising a ratchet wrench body assembly, strain gauges and a torque tube structure; in the present invention, when the ratchet wrench body assembly is loaded, the strain gauges are deformed in the torque tube structure, and deformation is converted into a corresponding torque and displayed on an LCD display screen; the overall length of the torque tube structure is adjustable to adapt to different environmental requirements, the overall torque arm length of the wrench is monitored in real time by an intemal laser displacement sensor after the length of the torque tube structure is changed, and the torque value is corrected in real time based on the change of the overall torque arm length, so as to improve the accuracy of torque monitoring, and improve the adaptability to operating environment.

## Description

### Technical Field

The present invention relates to the technical field of torque wrenches, and in particular to a digital display torque wrench.

### Background

A digital display torque wrench is an intelligent instrument adopting intelligent technology, and is transformed from traditional mechanical design to mathematical circuit and program design; the digital display torque wrench is widely used in the industries such as automobile, shipbuilding, metallurgy, chemical, bridge and machinery, especially in bolted connection of some high pressure pipes, pressure vessels and flanges; in order to enhance reliability and tightness, a pretightening force is exerted for most of threads upon connection.

At present, a Chinese patent with an application number of CN202021809346.3 discloses a wireless digital display torque wrench, comprising a wrench; a bidirectional ratchet head is fixedly installed on one end of the wrench; an indicator light, an LCD display and a function button are installed in the middle part of the wrench from left to right in sequence; a battery cover is fixedly installed on other end of the wrench; a grip is fixed at the connection between the wrench and the battery cover; and a ratchet torque square head is fixedly installed at the bottom frontal center of the bidirectional ratchet head.

Although a pretightening force can be accurately controlled by the digital display torque wrench of the prior art, it is necessary to artificially judge whether a preset torque is reached and stop a loading action during work. In a noisy or dim light operating environment, the reminding effect when the preset torque is reached is poor. In addition, most torque wrenches have fixed lengths, and multiple models and types of torque tubes are usually used or fixed matching sizes of torque tubes are added or removed to meet the requirements of different installation environments. Therefore, it is inconvenient to adjust the overall length of the wrench quickly and correct the torque value, which affects the use efficiency and adaptability.

### Summary

The purpose of the present invention is to provide a digital display torque wrench to solve the problems proposed in the above background.

To achieve the above purpose, the present invention adopts the following technical solution: a digital display torque wrench, comprising a ratchet wrench body assembly, one end of the ratchet wrench body assembly is connected with the inner side of a torque tube structure, and strain gauges are arranged at the connection between the ratchet wrench body assembly and the torque tube structure; when the ratchet wrench body assembly is loaded, the strain gauges are deformed in the torque tube structure, and deformation is converted into a corresponding torque and displayed on an LCD display screen of a circuit board assembly; the torque tube structure is used for adjusting the overall length to adapt to different environmental requirements of wrench length;

The circuit board assembly is installed above a plastic handle, and the plastic handle is fastened on one side of the torque tube structure away from the ratchet wrench body assembly; a battery pack and a motor assembly are inserted into the plastic handle, and the battery pack is used for providing power supply required by the circuit board assembly and the motor assembly; a controller is arranged in the circuit board assembly, and the controller is connected with the strain gauges and used for determining a corresponding preset torque limit trigger condition, and triggering a corresponding torque early warning state before a preset torque limit state;

The motor assembly is used for responding to the torque early warning state and performing early warning vibration according to the torque early warning state, a handle cover is fastened above the plastic handle to position the circuit board assembly for use, a surface sticker is fitted and fixed above the handle cover, and a tail cover assembly is locked and fixed on one end of the plastic handle away from the torque tube structure to position the battery pack and the motor assembly in the plastic handle.

Preferably, the vibration direction of the motor assembly is set in a corresponding direction perpendicular to the plane where the ratchet wrench body assembly is located.

Preferably, a processor capable of microprocessing and programming is arranged in the circuit board assembly, and an LED light bead and a buzzer are arranged above the circuit board assembly; lighting, buzzing and vibration reminding of the motor assembly are set by programming in the processor to remind the percentage of torque, and reminding is provided when a preset torque is reached.

Preferably, two strain gauges are provided, and a half-bridge layout structure is adopted; the two strain gauges are respectively located on both sides of the corresponding direction perpendicular to the plane where the ratchet wrench body assembly is located.

Preferably, the torque tube structure comprises an embedded tube section embedded in the plastic handle, a sleeve tube is integrally formed on one side of the embedded tube section away from the plastic handle, and the other side of the sleeve tube is fixedly connected with a groove tube; the inner part of one side of the groove tube away from the sleeve tube is connected with the ratchet wrench body assembly and the strain gauges, a telescopic structure used for changing the overall length of the wrench is arranged in the sleeve tube, one side of the outer surface of the sleeve tube close to the embedded tube section is fixedly connected with a positioning ring used for limiting a position locking structure, the inner side of the position locking structure is connected with the sleeve tube, and the position locking structure is used for preventing motion of the telescopic structure; the right side of the inner part of the sleeve tube is provided with a laser displacement sensor, and the laser displacement sensor is used for monitoring the position where the overall length of the wrench is changed by the telescopic structure.

Preferably, the telescopic structure comprises a mounting bin arranged on one side of the inner part of the sleeve tube close to the embedded tube section, the middle side of the inner part of the mounting bin is securely connected with a servo motor used for driving a shaft column to rotate, the shaft column is penetrated through and rotated on the right side of the inner part of the sleeve tube, one side of the shaft column close to the servo motor is coaxially and rotationally connected with a moving gear, and a screw rod is integrally formed on the other side of the shaft column; the left side of the moving gear is rotationally connected with the sleeve tube, and the outer side of the moving gear is connected with the position locking structure; one side of the outer surface of the screw rod is in threaded connection with an inner screw block used for driving an inner tube to move, the inner tube slides laterally in the sleeve tube, and the left side of the inner tube is fixed to the groove tube; the inner screw block is fixedly connected with one side of the inner tube away from the groove tube, the screw rod is arranged in the inner tube, and the central axis of the screw rod coincides with the central axis of the inner tube.

Preferably, three support columns which play a role of supporting rotation are distributed on the outer surface of the shaft column, and the top sides of the support columns are fixed to the sleeve tube; one end of the screw rod away from the shaft column is fixedly connected with a wafer used for limiting the inner screw block, and the outer surface of the wafer is in contact with the inner wall of the inner tube.

Preferably, four convex strips are equidistantly arranged on the outer surface of the inner tube, four grooves are arranged in the sleeve tube at positions corresponding to the convex strips, and the four convex strips are respectively inserted into and slide in the four grooves.

Preferably, the right side of the inner part of the sleeve tube is provided with an empty groove used for loading the position locking structure, an annular convex seat is arranged outside the sleeve tube and on the left side of the empty groove, and four grooves used for being slidably connected with the position locking structure are equidistantly arranged in the annular convex seat.

Preferably, the position locking structure comprises a sliding sleeve with the inner side in sliding contact with the annular convex seat, four sliding blocks are respectively arranged on the inner side of the sliding sleeve at positions corresponding to the four grooves, the four sliding blocks are respectively inserted into and slide in the four grooves to prevent the sliding sleeve from rotating, one side of the inner part of the sliding sleeve away from the annular convex seat is fixedly connected with a curved inner tooth plate used for meshing with and limiting fixed gears, four return springs are respectively arranged above one side of the curved inner tooth plate close to the annular convex seat at positions corresponding to the four sliding blocks, the left sides of the four return springs are connected with the annular convex seat, two fixed gears are provided and respectively connected with the upper and lower sides of the telescopic structure to be meshed and limited, a positioning bolt is penetrated through and rotated on the middle side of the inner part of each of the two fixed gears, and the left side of the positioning bolt is fastened to the sleeve tube.

Preferably, the LED light bead can emit red light, green light and yellow light, and when an implementation torque reaches 80% of the preset torque, the buzzer buzzes at a rate of 2S/time, and the green light of the LED light bead flashes; when the implementation torque reaches 90% of the preset torque, the buzzer buzzes at a rate of 1S/time, and the yellow light of the LED light bead flashes; when the implementation torque reaches 100% of the preset torque, the buzzer buzzes continuously, the red light of the LED light bead flashes, and the motor assembly vibrates.

Preferably, the laser displacement sensor is electrically connected with the processor capable of microprocessing and programming arranged in the circuit board assembly, and is used for monitoring the position of the inner tube to judge the overall length of the wrench by the position information of the inner tube, measure the actual torque arm length in real time, and conduct torque arm compensation by real-time multiplication through DSP, so that the torque value can be corrected in real time after the overall length of the wrench is changed.

Preferably, the vibration of the motor assembly can be started by direct operation, so as to guide the ratchet wrench body assembly to be aligned for use through vibration strength, and improve the positioning accuracy during blind operation.

Compared with the prior art, the present invention has the following beneficial effects:

In the present invention, strain gauges are arranged at the connection between the ratchet wrench body assembly and the torque tube structure; when the ratchet wrench body assembly is loaded, the strain gauges are deformed in the torque tube structure, and deformation is converted into a corresponding torque value and displayed on an LCD display screen of a circuit board assembly; the torque tube structure is used for adjusting the overall length to adapt to different environmental requirements of wrench length, the overall torque arm length of the wrench is monitored in real time by an internal laser displacement sensor after the length of the torque tube structure is changed, and the torque value is corrected in real time based on the change of the overall torque arm length, so as to improve the accuracy of torque monitoring, and improve the adaptability to operating environment; in addition, a motor assembly is inserted into a plastic handle, a corresponding preset torque limit trigger condition is determined by the amount of deformation generated by the strain gauges, and a corresponding torque early warning state is triggered before a preset torque limit state; the motor assembly is used for responding to the torque early warning state and performing early warning vibration according to the torque early warning state, so as to improve the effect of controlling and adjusting a pretightening force.

In the present invention, the vibration direction of the motor assembly is set in a corresponding direction perpendicular to the plane where the ratchet wrench body assembly is located, so as to make the vibration reminding sensed by an operator when holding the plastic handle by hand more intuitive; the vibration of the motor assembly can be started by direct operation, so as to guide the ratchet wrench body assembly to be aligned for use through vibration strength, and improve the positioning accuracy during blind operation; a processor capable of microprocessing and programming is arranged in the circuit board assembly, and an LED light bead and a buzzer are arranged above the circuit board assembly; lighting, buzzing and vibration reminding of the motor assembly are set by programming in the processor to remind the percentage of torque, and reminding is provided when a preset torque is reached, so that visual, aural and tactile reminding functions are provided.

In the present invention, one end of the screw rod away from the shaft column is fixedly connected with a wafer used for limiting the inner screw block, so as to prevent the inner screw block from separating from the surface of the screw rod; the outer surface of the wafer is in contact with the inner wall of the inner tube, so as to make the wafer provide an auxiliary supporting force in the inner tube to further improve the motion stability of the screw rod and the inner tube; four convex strips are equidistantly arranged on the outer surface of the inner tube, four grooves are arranged in the sleeve tube at positions corresponding to the convex strips, and the four convex strips are respectively inserted into and slide in the four grooves, so as to make the inner tube move stably and laterally in the sleeve tube, prevent the inner tube from rotating, and ensure the effect of adjusting the overall length of the wrench.

In the present invention, after the sliding sleeve is pushed to compress the return springs, the curved inner tooth plate and the fixed gears are released from a meshing and clamping state; at this time, the screw rod can be driven by the shaft column to rotate, and the fixed gears are driven to rotate by the moving gear with the rotation of the shaft column, so as to avoid affecting the normal rotation of the shaft column; in addition, the compression of the return springs are released after the rotation is stopped, the curved inner tooth plate is re-inserted into and meshed with the fixed gears by the elastic force of the return springs, and the moving gear and the shaft column are positioned to prevent rotation by limiting the motion of the fixed gears, so as to ensure the effect of stabilizing the overall length of wrench.

### Description of Drawings

Fig. 1 is a structural schematic diagram of the present invention;
Fig. 2 is a partially exploded schematic diagram of a ratchet wrench body assembly, strain gauges and a torque tube structure of the present invention;
Fig. 3 is a structurally exploded schematic diagram of internal and top installation of a plastic handle of the present invention;
Fig. 4 is a structural schematic diagram of a torque tube structure of the present invention;
Fig. 5 is a structural schematic diagram of connection between a sleeve tube and a telescopic structure of the present invention;
Fig. 6 is a structural schematic diagram of connection between a sleeve tube and a position locking structure of the present invention.

In the figures: ratchet wrench body assembly-1, strain gauge-2, torque tube structure-3, plastic handle-4, battery pack and motor assembly-5, circuit board assembly-6, handle cover-7, surface sticker-8, tail cover assembly-9, embedded tube section-31, sleeve tube-32, positioning ring-33, telescopic structure-34, position locking structure-35, groove tube-36, laser displacement sensor-37, empty groove-321, annular convex seat-322, groove-323, mounting bin-341, servo motor-342, moving gear-343, shaft column-344, screw rod-345, inner screw block-346, inner tube-347, support columns-3441, wafer-3451, convex strip-3471, sliding sleeve-351, curved inner tooth plate-352, fixed gear-353, return spring-354, and sliding block-3511.

### Detailed Description

To further explain the technical solution of the present invention, the present invention is described in detail below through specific embodiments.

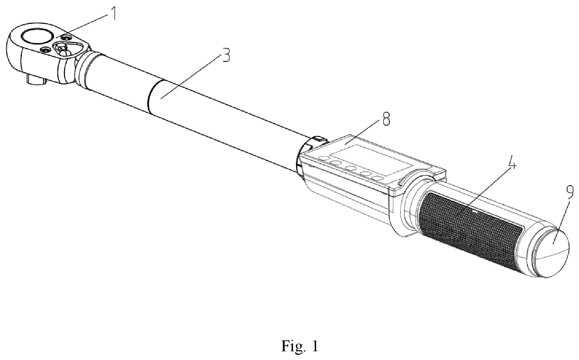

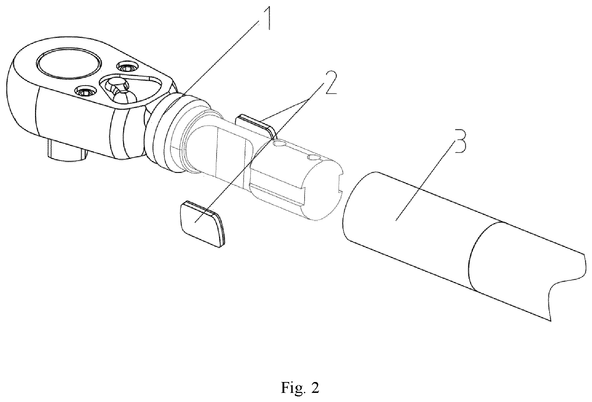

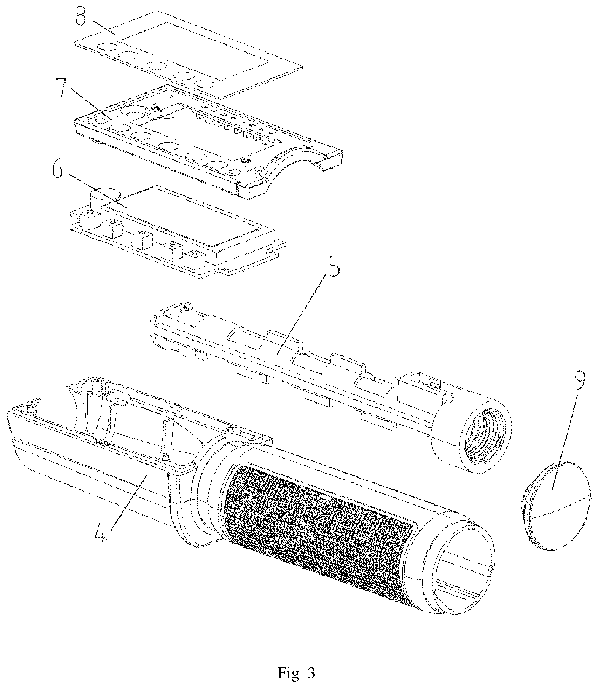

By referring to Fig. 1, Fig. 2 and Fig. 3, the present invention provides a digital display torque wrench, comprising a ratchet wrench body assembly 1, one end of the ratchet wrench body assembly 1 is connected with the inner side of a torque tube structure 3, and strain gauges 2 are arranged at the connection between the ratchet wrench body assembly 1 and the torque tube structure 3; when the ratchet wrench body assembly 1 is loaded, the strain gauges 2 are deformed in the torque tube structure 3, and deformation is converted into a corresponding torque and displayed on an LCD display screen of a circuit board assembly 6; the torque tube structure 3 is used for adjusting the overall length to adapt to different environmental requirements of wrench length; after the length of the torque tube structure 3 is changed, the torque value can be corrected in real time based on the change of the overall torque arm length, so as to improve the accuracy of torque monitoring, and improve the adaptability to operating environment;

The circuit board assembly 6 is installed above a plastic handle 4, and the plastic handle 4 is fastened on one side of the torque tube structure 3 away from the ratchet wrench body assembly 1; a battery pack and a motor assembly 5 are inserted into the plastic handle 4, and the battery pack is used for providing power supply required by the circuit board assembly 6 and the motor assembly; a controller is arranged in the circuit board assembly 6, and the controller is connected with the strain gauges 2 and used for determining a corresponding preset torque limit trigger condition through the amount of deformation generated by the strain gauges 2, and triggering a corresponding torque early warning state before a preset torque limit state; the motor assembly is used for responding to the torque early warning state and performing early warning vibration according to the torque early warning state, a handle cover 7 is fastened above the plastic handle 4 to position the circuit board assembly 6 for use, a surface sticker 8 is fitted and fixed above the handle cover 7, and a tail cover assembly 9 is locked and fixed on one end of the plastic handle 4 away from the torque tube structure 3 to position the battery pack and the motor assembly 5 in the plastic handle 4; the battery pack can be replaced by opening the tail cover assembly 9.

Two strain gauges 2 are provided, and a half-bridge layout structure is adopted; the two strain gauges 2 are respectively located on both sides of a corresponding direction perpendicular to the plane where the ratchet wrench body assembly 1 is located; the vibration direction of the motor assembly is set in the corresponding direction perpendicular to the plane where the ratchet wrench body assembly 1 is located, so as to make the vibration reminding sensed by an operator when holding the plastic handle 4 by hand more intuitive; the vibration of the motor assembly can be started by direct operation, so as to guide the ratchet wrench body assembly 1 to be aligned for use through vibration strength, and improve the positioning accuracy during blind operation; a processor capable of microprocessing and programming is arranged in the circuit board assembly 6, and an LED light bead and a buzzer are arranged above the circuit board assembly 6; lighting, buzzing and vibration reminding of the motor assembly are set by programming in the processor to remind the percentage of torque, and reminding is provided when a preset torque is reached, so that the effect of controlling and adjusting a pretightening force is improved by using visual, aural and tactile reminding functions.

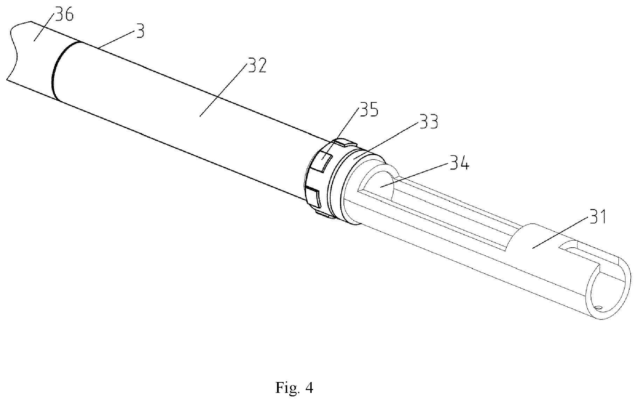

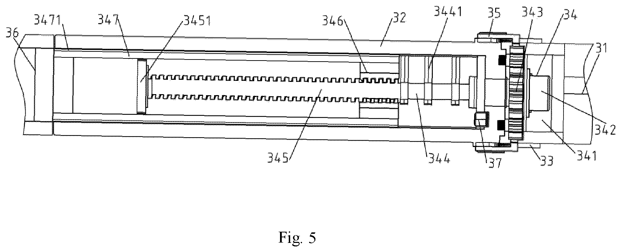

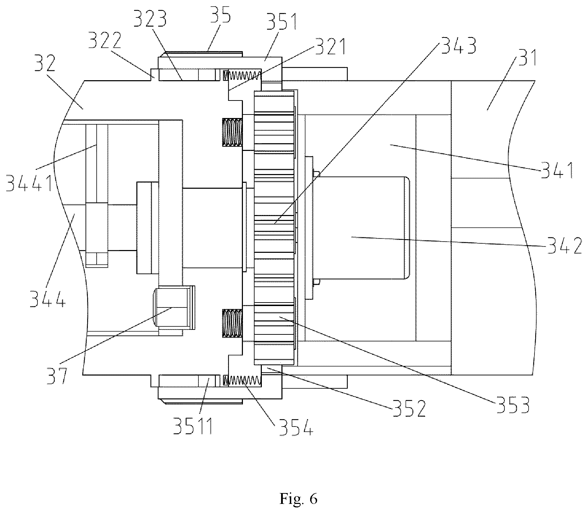

By referring to Fig. 1-Fig. 6, the present invention provides a digital display torque wrench, wherein the torque tube structure 3 comprises an embedded tube section 31 embedded in the plastic handle 4, a sleeve tube 32 is integrally formed on one side of the embedded tube section 31 away from the plastic handle 4, and the other side of the sleeve tube 32 is fixedly connected with a groove tube 36; the inner part of one side of the groove tube 36 away from the sleeve tube 32 is connected with the ratchet wrench body assembly 1 and the strain gauges 2, a telescopic structure 34 used for changing the overall length of the wrench is arranged in the sleeve tube 32, one side of the outer surface of the sleeve tube 32 close to the embedded tube section 31 is fixedly connected with a positioning ring 33 used for limiting a position locking structure 35, the inner side of the position locking structure 35 is connected with the sleeve tube 32, and the position locking structure 35 is used for preventing motion of the telescopic structure 34; the right side of the inner part of the sleeve tube 32 is provided with a laser displacement sensor 37, and the laser displacement sensor 37 is used for monitoring the position where the overall length of the wrench is changed by the telescopic structure 34.

The telescopic structure 34 comprises a mounting bin 341 arranged on one side of the inner part of the sleeve tube 32 close to the embedded tube section 31, the middle side of the inner part of the mounting bin 341 is securely connected with a servo motor 342 used for driving a shaft column 344 to rotate, a sealed environment is provided for the servo motor 342 by the mounting bin 341, the shaft column 344 is penetrated through and rotated on the right side of the inner part of the sleeve tube 32, one side of the shaft column 344 close to the servo motor 342 is coaxially and rotationally connected with a moving gear 343, and a screw rod 345 is integrally formed on the other side of the shaft column 344, so that the screw rod 345 is driven to rotate when the shaft column 344 is driven by the servo motor 342 to rotate; the left side of the moving gear 343 is rotationally connected with the sleeve tube 32, so as to assist the limitation of the shaft column 344 to ensure the rotation stability; the outer side of the moving gear 343 is connected with the position locking structure 35, and the moving gear 343 is limited or released from the limitation through the action of the position locking structure 35, so as to position the shaft column 344 through the position locking structure 35 after rotation; one side of the outer surface of the screw rod 345 is in threaded connection with an inner screw block 346 used for driving an inner tube 347 to move, the inner tube 347 slides laterally in the sleeve tube 32, and the left side of the inner tube 347 is fixed to the groove tube 36; the inner screw block 346 is fixedly connected with one side of the inner tube 347 away from the groove tube 36, so that the inner tube 347 can move in the sleeve tube 32 and change position under the cooperation of the screw rod 345 and the inner screw block 346, and the position of the inner tube 347 relative to the sleeve tube 32 can be changed by driving the ratchet wrench body assembly 1 through the groove tube 36, thus to adjust and change the overall length of the wrench to adapt to different environmental positions; the screw rod 345 is arranged in the inner tube 347, and the central axis of the screw rod 345 coincides with the central axis of the inner tube 347, so as to ensure the uniformity of force borne by the inner tube 347.

Three support columns 3441 which play a role of supporting rotation are distributed on the outer surface of the shaft column 344, and the top sides of the support columns 3441 are fixed to the sleeve tube 32 to ensure the rotation stability of the shaft column 344; one end of the screw rod 345 away from the shaft column 344 is fixedly connected with a wafer 3451 used for limiting the inner screw block 346, so as to prevent the inner screw block 346 from separating from the surface of the screw rod 345; the outer surface of the wafer 3451 is in contact with the inner wall of the inner tube 347, so as to make the wafer 3451 provide an auxiliary supporting force in the inner tube 347 to further improve the motion stability of the screw rod 345 and the inner tube 347; four convex strips 3471 are equidistantly arranged on the outer surface of the inner tube 347, four grooves are arranged in the sleeve tube 32 at positions corresponding to the convex strips 3471, and the four convex strips 3471 are respectively inserted into and slide in the four grooves, so as to make the inner tube 347 move stably and laterally in the sleeve tube 32, prevent the inner tube 347 from rotating, and ensure the effect of adjusting the overall length of the wrench.

The right side of the inner part of the sleeve tube 32 is provided with an empty groove 321 used for loading the position locking structure 35, an annular convex seat 322 is arranged outside the sleeve tube 32 and on the left side of the empty groove 321, and four grooves 323 used for being slidably connected with the position locking structure 35 are equidistantly arranged in the annular convex seat 322, so as to make the position locking structure 35 move laterally to prevent rotation, thus limiting the position of the moving gear 343 after the position locking structure 35 comes into contact with the moving gear 343 of the telescopic structure 34; the position locking structure 35 comprises a sliding sleeve 351 with the inner side in sliding contact with the annular convex seat 322, four sliding blocks 3511 are respectively arranged on the inner side of the sliding sleeve 351 at positions corresponding to the four grooves 323, the four sliding blocks 3511 are respectively inserted into and slide in the four grooves 323 to prevent the sliding sleeve 351 from rotating and ensure the lateral moving stability of the sliding sleeve 351, one side of the inner part of the sliding sleeve 351 away from the annular convex seat 322 is fixedly connected with a curved inner tooth plate 352 used for meshing with and limiting fixed gears 353, four return springs 354 are respectively arranged above one side of the curved inner tooth plate 352 close to the annular convex seat 322 at positions corresponding to the four sliding blocks 3511, and the left sides of the four return springs 354 are connected with the annular convex seat 322; after the sliding sleeve 351 is pushed to compress the return springs 354, the curved inner tooth plate 352 and the fixed gears 353 are released from a meshing and clamping state; at this time, the screw rod 345 can be driven by the shaft column 344 to rotate; the compression of the return springs 354 are released after the rotation is stopped, the curved inner tooth plate 352 is re-inserted into and meshed with the fixed gears 353 by the elastic force of the return springs 354, and the moving gear 343 and the shaft column 344 are positioned to prevent rotation by limiting the motion of the fixed gears 353; two fixed gears 353 are provided and respectively connected with the upper and lower sides of the moving gear 343 to be meshed and limited, so as to improve the stability of the limit action; a positioning bolt is penetrated through and rotated on the middle side of the inner part of each of the two fixed gears 353, and the left side of the positioning bolt is fastened to the sleeve tube 32; when the curved inner tooth plate 352 and the fixed gears 353 are released from a meshing and clamping state, the fixed gears 353 are driven to rotate by the moving gear 343 with the rotation of the shaft column 344, so as to avoid affecting the normal rotation of the shaft column 344.

The LED light bead can emit red light, green light and yellow light, and when an implementation torque reaches 80% of the preset torque, the buzzer buzzes at a rate of 2S/time, and the green light of the LED light bead flashes; when the implementation torque reaches 90% of the preset torque, the buzzer buzzes at a rate of 1S/time, and the yellow light of the LED light bead flashes; when the implementation torque reaches 100% of the preset torque, the buzzer buzzes continuously, the red light of the LED light bead flashes, and the motor assembly vibrates; the effect of controlling and adjusting a pretightening force can be significantly improved by using visual, aural and tactile reminding functions; the laser displacement sensor 37 is electrically connected with the processor capable of microprocessing and programming arranged in the circuit board assembly 6, and is used for monitoring the position of the inner tube 347 to judge the overall length of the wrench by the position information of the inner tube 347, measure the actual torque arm length in real time, and conduct torque arm compensation by real-time multiplication through DSP, so that the torque value can be corrected in real time after the overall length of the wrench is changed to reduce the monitoring error of the torque after the torque arm length is changed, and ensure accurate measurement results in different application scenarios.

The working principle of the digital display torque wrench in the present invention is as follows:
First, the overall length of torque tube structure 3 can be adjusted according to the environmental position where operation is required; the sliding sleeve 351 is pushed towards one side of ratchet wrench body assembly 1 first, and the return springs 354 are compressed by the sliding sleeve 351, so as to make the curved inner tooth plate 352 released from meshing with and limiting the fixed gears; then the servo motor 342 is controlled to start, and the shaft column 344, the moving gear 343 and the screw rod 345 are driven to rotate under the action of the servo motor 342, so that the inner tube 347 can move in the sleeve tube 32 and change position under the cooperation of the screw rod 345 and the inner screw block 346, and the position of the inner tube 347 relative to the sleeve tube 32 can be changed by driving the ratchet wrench body assembly 1 through the groove tube 36, thus to adjust and change the overall length of the wrench to a required length;
Second, after the overall length of the wrench is adjusted and changed, the sliding sleeve 351 is released, the sliding sleeve 351 is reset under the elastic action of the return springs 354, the curved inner tooth plate 352 is re-inserted into and meshed with the fixed gears 353 under the reset action of the sliding sleeve 351, and the moving gear 343 and the shaft column 344 are positioned to prevent rotation by limiting the motion of the fixed gears 353;
Third, after the position of the inner tube 347 in the sleeve tube 32 is changed, the position distance of the inner tube 347 is monitored by the laser displacement sensor 37, the position distance information is transmitted to the processor arranged in the circuit board assembly 6 to judge the overall length of the wrench at this time, measure the actual torque arm length in real time, and conduct torque arm compensation by real-time multiplication through DSP, so that the torque value can be corrected in real time after the overall length of the wrench is changed to reduce the monitoring error of the torque after the torque arm length is changed;
Fourth, a preset torque value required for early warning is preset by operating control keys on the surface sticker 8 corresponding to the circuit board assembly 6;
Fifth, the plastic handle 4 is held by a user by hand, the ratchet wrench body assembly 1 is placed in a position where a tightening force is required, and a tightening process is carried out by pressing by hand; in the tightening process, when an implementation torque reaches 80% of the preset torque, the buzzer buzzes at a rate of 2S/time, and the green light of the LED light bead flashes; when the implementation torque reaches 90% of the preset torque, the buzzer buzzes at a rate of 1S/time, and the yellow light of the LED light bead flashes; when the implementation torque reaches 100% of the preset torque, the buzzer buzzes continuously, the red light of the LED light bead flashes, and the motor assembly vibrates; the effect of controlling and adjusting a pretightening force can be significantly improved by using visual, aural and tactile reminding functions.

The above description is only preferred embodiments of the present invention, and is not intended to limit the present invention. Although the present invention is described in detail with reference to the above embodiments, those skilled in the art may still modify the technical solution recorded in the above embodiments, or equivalently replace some of the technical features. Any modification, equivalent replacement, improvement, etc. made within the spirit and the principle of the present invention shall be included within the protection scope of the present invention.

## Claims

1. A digital display torque wrench, comprising a ratchet wrench body assembly (1), one end of the ratchet wrench body assembly (1) is connected with the inner side of a torque tube structure (3), and strain gauges (2) are arranged at the connection between the ratchet wrench body assembly (1) and the torque tube structure (3); when the ratchet wrench body assembly (1) is loaded, the strain gauges (2) are deformed in the torque tube structure (3), and deformation is converted into a corresponding torque and displayed on an LCD display screen of a circuit board assembly (6); the torque tube structure (3) is used for adjusting the overall length to adapt to different environmental requirements of wrench length;
the circuit board assembly (6) is installed above a plastic handle (4), and the plastic handle (4) is fastened on one side of the torque tube structure (3) away from the ratchet wrench body assembly (1); a battery pack and a motor assembly (5) are inserted into the plastic handle (4), and the battery pack is used for providing power supply required by the circuit board assembly (6) and the motor assembly; a controller is arranged in the circuit board assembly (6), and the controller is connected with the strain gauges (2) and used for determining a corresponding preset torque limit trigger condition, and triggering a corresponding torque early warning state before a preset torque limit state;
the motor assembly is used for responding to the torque early warning state and performing early warning vibration according to the torque early warning state, a handle cover (7) is fastened above the plastic handle (4) to position the circuit board assembly (6) for use, a surface sticker (8) is fitted and fixed above the handle cover (7), and a tail cover assembly (9) is locked and fixed on one end of the plastic handle (4) away from the torque tube structure (3) to position the battery pack and the motor assembly (5) in the plastic handle (4).

2. The digital display torque wrench according to claim 1, wherein the vibration direction of the motor assembly is set in a corresponding direction perpendicular to the plane where the ratchet wrench body assembly (1) is located.

3. The digital display torque wrench according to claim 1, wherein a processor capable of microprocessing and programming is arranged in the circuit board assembly (6), and an LED light bead and a buzzer are arranged above the circuit board assembly (6); lighting, buzzing and vibration reminding of the motor assembly are set by programming in the processor to remind the percentage of torque, and reminding is provided when a preset torque is reached.

4. The digital display torque wrench according to claim 1, wherein two strain gauges (2) are provided, and a half-bridge layout structure is adopted; the two strain gauges (2) are respectively located on both sides of the corresponding direction perpendicular to the plane where the ratchet wrench body assembly (1) is located.

5. The digital display torque wrench according to claim 1, wherein the torque tube structure (3) comprises an embedded tube section (31) embedded in the plastic handle (4), a sleeve tube (32) is integrally formed on one side of the embedded tube section (31) away from the plastic handle (4), and the other side of the sleeve tube (32) is fixedly connected with a groove tube (36); the inner part of one side of the groove tube (36) away from the sleeve tube (32) is connected with the ratchet wrench body assembly (1) and the strain gauges (2), a telescopic structure (34) used for changing the overall length of the wrench is arranged in the sleeve tube (32), one side of the outer surface of the sleeve tube (32) close to the embedded tube section (31) is fixedly connected with a positioning ring (33) used for limiting a position locking structure (35), the inner side of the position locking structure (35) is connected with the sleeve tube (32), and the position locking structure (35) is used for preventing motion of the telescopic structure (34); the right side of the inner part of the sleeve tube (32) is provided with a laser displacement sensor (37), and the laser displacement sensor (37) is used for monitoring the position where the overall length of the wrench is changed by the telescopic structure (34).

6. The digital display torque wrench according to claim 5, wherein the telescopic structure (34) comprises a mounting bin (341) arranged on one side of the inner part of the sleeve tube (32) close to the embedded tube section (31), the middle side of the inner part of the mounting bin (341) is securely connected with a servo motor (342) used for driving a shaft column (344) to rotate, the shaft column (344) is penetrated through and rotated on the right side of the inner part of the sleeve tube (32), one side of the shaft column (344) close to the servo motor (342) is coaxially and rotationally connected with a moving gear (343), and a screw rod (345) is integrally formed on the other side of the shaft column (344); the left side of the moving gear (343) is rotationally connected with the sleeve tube (32), and the outer side of the moving gear (343) is connected with the position locking structure (35); one side of the outer surface of the screw rod (345) is in threaded connection with an inner screw block (346) used for driving an inner tube (347) to move, the inner tube (347) slides laterally in the sleeve tube (32), and the left side of the inner tube (347) is fixed to the groove tube (36); the inner screw block (346) is fixedly connected with one side of the inner tube (347) away from the groove tube (36), the screw rod (345) is arranged in the inner tube (347), and the central axis of the screw rod (345) coincides with the central axis of the inner tube (347).

7. The digital display torque wrench according to claim 6, wherein three support columns (3441) which play a role of supporting rotation are distributed on the outer surface of the shaft column (344), and the top sides of the support columns (3441) are fixed to the sleeve tube (32); one end of the screw rod (345) away from the shaft column (344) is fixedly connected with a wafer (3451) used for limiting the inner screw block (346), and the outer surface of the wafer (3451) is in contact with the inner wall of the inner tube (347).

8. The digital display torque wrench according to claim 6, wherein four convex strips (3471) are equidistantly arranged on the outer surface of the inner tube (347), four grooves are arranged in the sleeve tube (32) at positions corresponding to the convex strips (3471), and the four convex strips (3471) are respectively inserted into and slide in the four grooves.

9. The digital display torque wrench according to claim 5, wherein the right side of the inner part of the sleeve tube (32) is provided with an empty groove (321) used for loading the position locking structure (35), an annular convex seat (322) is arranged outside the sleeve tube (32) and on the left side of the empty groove (321), and four grooves (323) used for being slidably connected with the position locking structure (35) are equidistantly arranged in the annular convex seat (322).

10. The digital display torque wrench according to claim 9, wherein the position locking structure (35) comprises a sliding sleeve (351) with the inner side in sliding contact with the annular convex seat (322), four sliding blocks (3511) are respectively arranged on the inner side of the sliding sleeve (351) at positions corresponding to the four grooves (323), the four sliding blocks (3511) are respectively inserted into and slide in the four grooves (323) to prevent the sliding sleeve (351) from rotating, one side of the inner part of the sliding sleeve (351) away from the annular convex seat (322) is fixedly connected with a curved inner tooth plate (352) used for meshing with and limiting fixed gears (353), four return springs (354) are respectively arranged above one side of the curved inner tooth plate (352) close to the annular convex seat (322) at positions corresponding to the four sliding blocks (3511), the left sides of the four return springs (354) are connected with the annular convex seat (322), two fixed gears (353) are provided and respectively connected with the upper and lower sides of the telescopic structure (34) to be meshed and limited, a positioning bolt is penetrated through and rotated on the middle side of the inner part of each of the two fixed gears (353), and the left side of the positioning bolt is fastened to the sleeve tube (32).
